Europäisches Patentamt

European Patent Office

Office européen des brevets

(11) Publication number: **0 410 792 B1**

## (12) EUROPEAN PATENT SPECIFICATION

(45) Date of publication of patent specification: **12.04.95**    (51) Int. Cl.⁶: **B29C 55/28**, B29C 47/00

(21) Application number: **90308277.4**

(22) Date of filing: **27.07.90**

(54) **Double bubble process for making strong, thin films.**

(30) Priority: **28.07.89 US 387056**
**16.03.90 US 494699**

(43) Date of publication of application:
**30.01.91 Bulletin  91/05**

(45) Publication of the grant of the patent:
**12.04.95 Bulletin  95/15**

(84) Designated Contracting States:
**AT BE CH DE DK ES FR GB GR IT LI LU NL SE**

(56) References cited:
**EP-A- 0 221 726      EP-A- 0 292 894**
**DE-B- 1 181 394      GB-A- 922 084**
**US-A- 3 355 531      US-A- 3 456 044**
**US-A- 3 576 658      US-A- 3 661 482**
**US-A- 4 851 272**

(73) Proprietor: **W.R. Grace & Co.-Conn.**
**Grace Plaza,**
**1114 Avenue of the Americas**
**New York,**
**New York 10036 (US)**

(72) Inventor: **Schirmer, Henry George**
**156 Edgecombe Drive**
**Spartanburg, SC 29302 (US)**

(74) Representative: **Bentham, Stephen et al**
**J.A. KEMP & CO.**
**14 South Square**
**Gray's Inn**
**London WC1R 5LX (GB)**

## Description

The present invention pertains to packaging film, and more particularly to a thin polymeric film suitable for replacing polyvinyl chloride film especially in packaging applications.

Polyvinyl chloride (PVC) has long been used in many applications in the packaging art. One particularly wide-spread application for PVC is the use of such material as an overwrap material for trayed retail cuts of meat and other food products in a retail environment.

PVC has several desirable properties for this use. For example, it has excellent optics and good elasticity and stretch properties at use temperatures.

Unfortunately, PVC also has several disadvantages, including the production of hydrogen chloride gas during heat sealing and the generally corrosive effects of such gases in the packaging room.

It would be of great benefit to the packaging industry, and particular to applications requiring an instore film for overwrapping trayed food products, to provide a film with many of the advantages of PVC but without the disadvantages described above.

Applicant has discovered that a relatively thin polymeric film, preferably a polyolefin, and more preferably very low density polyethylene (VLDPE), produced by hot blowing and then stretch orienting the extruded film, exhibits excellent elasticity, toughness, stretch and optical properties.

The U.S. Patent No. 3,456,044 (Pahlke) mentions thin films of thicknesses less than 1 mil such as 0.5 mils, and discloses a double bubble method for biaxially orienting thermoplastic films including the steps of producing a primary tubing which is inflated by introducing air into the interior thereof, and a cooling ring 22, as well as squeeze rolls 34 and 28, with rolls 34 having a greater speed than rolls 28. Between the two paris of squeeze rolls is a reinflated secondary bubble. If annealing is desired, the tubing can be reinflated to form a bubble 70.

U.S. Patent No. 3,555,604 (Pahlke) is a patent based on a divisional application which was derived from the same priority application as the '044 patent described above, and discloses the same information described above for the '044 patent.

U.S. 2,576,658 discloses a process for manufacturing a coated, simultaneously biaxially oriented film by applying to the inside surface of an unoriented tubular film a coating liquid having characteristics to wet the inside of the tubular film and apply a coating thereto and then orienting the film by drawing between spaced pairs of nip rolls and inflating the tubular film using pressurised gas.

EP-A-292,894 discloses a co-extruded, heat shrinkable thermoplastic multilayer film for packing fresh red meat cuts and processed meats. The film comprises a first layer comprising very low density polyethylene, a first core layer of vinylidene chloride-methyl acrylate and a second layer comprising very low density polyethylene.

In one aspect of the invention, a method of making a thin, oriented polymeric film comprises:
a) extruding the polymer as a melt stream through a tubular die (12);
b) hot blowing the extruded film downward to a first set of pinch rolls (16a); the film forming a primary bubble (14);
c) passing the hot blown film in contact with a heated liquid medium located in a reservoir (28) disposed at a lower end of the primary bubble;
d) heating the hot blown film to a temperature above its orientation temperature;
e) directing the heated film through the first set of pinch rolls;
f) reinflating the hot blown film below the first set of pinch rolls by a blown bubble process; and
g) collapsing the reinflated film through a second set of pinch rolls (22).

In yet another aspect of the invention, an apparatus for making thin, oriented polymeric film comprises:
a) means for extruding the polymer as a melt stream through a tubular die (12);
b) means for hot blowing the extruded film downward to a first set of pinch rolls (16a) the film forming a primary bubble (14);
c) means for heating the hot blown film to a temperature above its orientation temperature;
d) a first set of pinch rolls through which the heated film is directed;
e) a second set of pinch rolls (22) below the first set of pinch rolls by means of which the heated film, after reinflation by a blown bubble process, is collapsed; and
f) means for circulating a heated liquid to and from a reservoir (28) disposed at the lower end of the primary bubble.

The method of the invention may be used to produce a film which is a monolayer on a multilayer film. Monolayer films may, for example, comprise very low density polyethylene, ethylene vinyl acetate on a mixture thereof or alternatively may comprise high density polyethylene. Multilayer films may for example comprise a core layer comprising very low density polyethylene, ethylene vinyl acetate copolymer, or a blend thereof; and two outer layers comprising an olefinic polymer or copolymer. In such multilayer films the olefinic polymer or copolymer of the outer layers may comprise ethylene vinyl acetate copolymer, very low density polyethylene, ethylene acrylic acid copolymer, ethylene methacrylic acid copolymer, or blend of any of these materials. Such multilayer films may further comprise an intermediate layer comprising a blend of two ethylene vinyl acetate copolymer resins or wherein the ethylene vinyl acetate copolymer of the outer layers is blended with very low density polyethylene.

The term "polyolefin" is used herein in its stricter sense to mean a thermoplastic polymer derived from simple olefins. Among these are polyethylene, polypropylene and copolymers thereof with olefinic comonomers. For example, very low density polyethylene may be considered a linear ethylene copolymer with a comonomer comprising such materials as butene, hexene or octene. The term "polyolefin" is also used herein in a broader sense to include copolymers of ethylene with comonomers that are not themselves olefins, such as vinyl acetate (e.g. ethylene vinyl acetate copolymer or EVA).

The term "very low density polyethylene", or "VLDPE" is used herein to describe linear ethylene alphaolefin copolymer having densities of generally between about 0.890 and 0.915 grams/cubic centimeter, and produced by a catalytic, low pressure process.

The term "ethylene vinyl acetate copolymer" (EVA) as used herein refers to a copolymer formed from ethylene and vinyl acetate monomers wherein the ethylene derived units are present in major amounts and the vinyl acetate derived units are present in minor amounts, generally one to 30 percent by weight.

The invention may be further understood by reference to the drawings herein, where:

FIG. 1 is a schematic diagram indicating the apparatus and process by which the film of the present invention is made; and

FIG. 2 is a graph showing the relationship between tensile force applied to a film, and elongation, for different types of films including the double bubble film of the present invention.

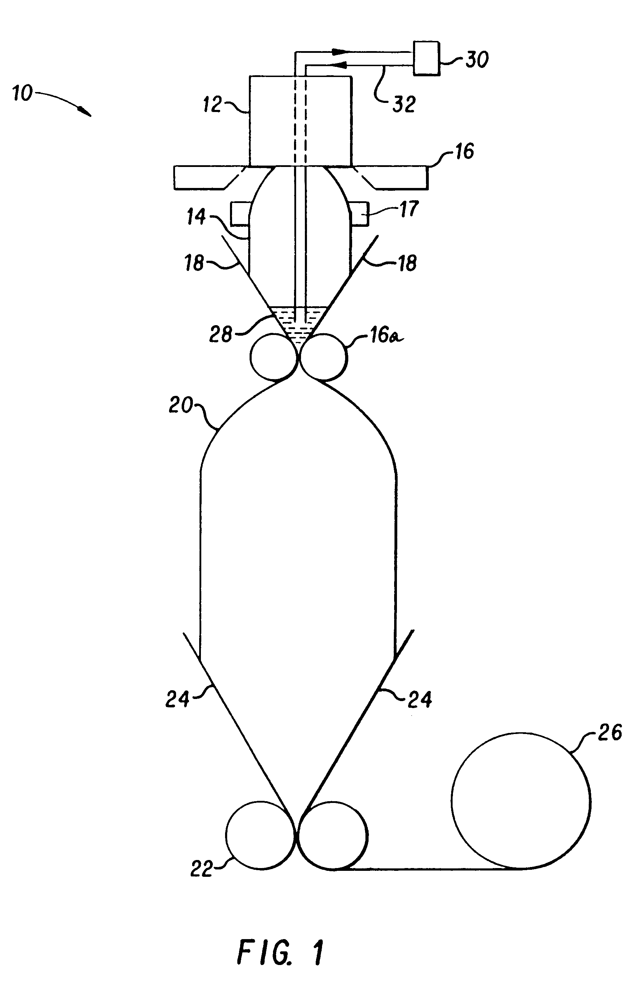

Figure 1 shows schematically a device 10 for making the thin films of the present invention.

A melt stream of a polymeric material, preferably a material such as VLDPE is extruded through an extruder (not shown) and exits through a die 12 in a conventional manner. The extruded film is hot blown by conventional techniques to form a blown bubble 14.

Air cooling ring 16 positioned circumferentially around the blown bubble at the position shown cools the thermoplastic melt as it exits die 12.

An optional auxiliary chilling ring 17 may also be positioned circumferentially around the blown bubble down stream from air cooling ring 16 to further chill the hot blown film.

The primary bubble 14 is melt oriented in both the machine and transverse directions. Various blow up ratios may be used, but preferably the primary bubble 14 is hot blown to a blow up ratio of between 1.5 and 3.0.

The primary bubble 14 is collapsed at pinch rolls 16a.

To assist in this process, guide plates 18 are positioned at the extremities of the blown bubble 14.

The collapsed bubble is then reinflated in a blown bubble process to stretch orient the blown and collapsed film. This is done in a conventional manner by trapping air or other hot gas within the secondary bubble 20 so that the material stretches at its orientation temperature transversely to impart further orientation of the material in the transverse direction. The secondary bubble 20 is collapsed at a second set of pinch rolls 22. A second set of guide plates 24 may be employed to assist in the collapsing process.

The second set of pinch rolls 22 is rotated at a speed faster than the first set of pinch rolls 16a to impart stretch orientation in the machine or longitudinal direction to the thermoplastic material.

The recollapsed bubble 20 then passes from the second set of pinch rolls 22 to take up roll 26.

The take up roll 26 may be a mill log which can be immediately stored or shipped to a distributor or customer, or may be stored for further processing such as slitting into single wound film, machine or natural center fold film. Thus, as used herein the take up roll 26 represents any further processing, storage, or further modification of the double wound, collapsed film once it exits the second set of pinch rolls 22, and is used herein to denote any of these possible further processing steps.

When using very low density polyethylene, it was noticed that some thickened edges of the film resulted from this process. To correct this deficiency, it is preferred that a reservoir 28 of heated fluid be disposed at the lower end of primary bubble 14 in such a way that the collapsing material drawn through the primary set of pinch rolls 16a will pass in communication with the heated fluid. In this manner, the film is more uniformly heated and temperature control can be achieved. Thickened tape edges can be substantially avoided by such means.

Although the heated fluid of reservoir 28 is preferably hot water, other media may be used if temperatures above the 100°C (212°F) limit of hot water are desired. For example propylene glycol ( a food approved material), hot oil or hot emulsions may be used. One skilled in the art will understand that the exact nature of the heated fluid is not as critical as its effectiveness in helping to uniformly heat the collapsing bubble 14 as it is drawn through pinch rolls 16a, and to uniformly heat the collapsing bubble 14 to a temperature above its orientation temperature.

The heated fluid may also be an "active" substance which not only reheats the surrounding film, but also actually coats the interior of the bubble as it passes over the reservoir. An example is a hot wax or other functional coating.

The heated fluid may be recirculated from the reservoir through a heating means 30 by means of conduits 32 or other suitable transfer means. Using the reservoir 28 of heated fluid, the types of materials which may be effectively used in the present process and device are increased. These materials fall generally into three classes.

The first class consists of crystalline polymers which can be quenched to the amorphous state by either air or an external cooling mandrel of the types depicted schematically at 16 and 17 of Figure 1. Examples of such materials are polyethylene terephthalate, saran, and polypropylene. In the case of polyethylene terephthalate and saran, hot water is a suitable liquid medium for use in reservoir 28. In the case of polypropylene, a higher temperature liquid medium is preferred.

A second class of materials suitable for the present process are amorphous polymers such as polyethylene terephthalate glycol (PETG), polystyrene, and polycarbonate. In the case of PETG, hot water is a suitable liquid medium for reservoir 28. Higher temperature liquid media are preferred for polystyrene and polycarbonate.

A third class of materials which can be used with the present process are crystalline polymers which are not quenched amorphous by using air or external mandrel means. An example is high density polyethylene. In this case, a temperature of at least 115°C (240°F) for the medium of reservoir 28 is required to melt out most of the crystalline structure of HDPE material.

A major advantage of this process and device of the present invention is that a variety of polyolefinic materials may be made into relatively thin, oriented, tough materials suitable for packaging applications such as in store tray overwrap. Film gauges of less than 25 $\mu$m (1 mil), and preferably less than 15 $\mu$m (.6 mils), even more preferably less than 13 $\mu$m (.5 mils) and as low as 8 or 5 $\mu$m (0.3 or .2 mils) or less are obtainable. Even films with thicknesses as low as 3 $\mu$m (.1 mils) or lower can be made by the practice of the present invention.

Although monolayer films are preferred, and particularly materials such as very low density polyethylene, multilayer films may also be produced. This is both technically possible and also sometimes desirable depending on the nature of the monolayer film. For example a VLDPE available from Union Carbide and sold under the designation DFDA 1138 is a desirable material from a performance point of view. However, where materials have not yet attained food contact status, outer layers of a food approved material such as EVA may be used to "sandwich" the VLDPE or other core material. When more than one layer is to be used, coextrusion techniques commonly available in the art may be employed.

The invention may be further understood by reference to the following examples.

Example 1

A central melt stream of very low density polyethylene (DFDA 1138 available from Union Carbide) and outside melt streams of an EVA (Elvax 3130 available from du Pont) were coextruded through a coextrusion die and hot blown to a blow up ratio of 1.78. The hot blown film had a thickness of 2 mils. The hot blown film was collapsed at a first set of pinch rolls and then inflated between the first set of pinch rolls and a second set of pinch rolls. The secondary bubble did not impart any substantial transverse orientation to the film material. The machine direction orientation was increased by speeding up the second set of pinch rolls relative to the first set of pinch rolls. The speed of the first set of pinch rolls was 11 m (36 feet) per minute. The speed of the second set of pinch rolls was 55 m (180 feet) per minute. The result was a stable bubble with no transverse expansion and 5:1 machine direction expansion to produce a final film with a thickness of 10 $\mu$m (.4 mils).

Example 2

A film was produced substantially like that of Example 1, with the same conditions for the primary bubble (hot blown film). The secondary bubble was inflated from 710 mm (28 inch) lay flat width to 1170 mm (46 inch) lay flat width with transverse expansion of 1.64:1.

The speed of the second set of pinch rolls was 108 feet per minute to effect a machine direction expansion of the secondary bubble of 3:1. The film collected had cold thick edges because of lack of temperature control, but the center had a gauge thickness of 5 $\mu$m (.20 mils).

Example 3

The 5 $\mu$m (20 mil) film of Example 2 was used to package cut beef in a foam tray. The film exhibited strength and stretch characteristics approaching the characteristics of 15 $\mu$m (.60 mil) stretch PVC. Hot wire cutting was similar to the PVC, but sealing required a heat-cool cycle to prevent the tabs from shrinking.

Packages made with the film of Example 2 exhibited more elastic recovery than PVC when poked with the finger.

It should be noted that when the heated hot blown film is collapsed through nip roll 16a and expanded into secondary bubble 20, the film can be either monoaxially or biaxially stretched. Stretching in the machine direction can be from ratios of 1:1 to 9:1 for instance 1:1 to 5:1. In the transverse direction stretching ratios may range from 1:1 to 5:1. Any combination of ranges within those just described is possible. For example, the film may be essentially unstretched in the machine direction (1:1) and biaxially stretched at a 3:1 ratio in the transverse direction. The reverse is also true.

Additionally, the degree of transverse direction or machine direction stretching in secondary bubble 20 is substantially independent of the blow ratio in primary bubble 14, so that many combinations of blow up ratios in the primary and secondary bubble are achievable. However, more stress (higher bubble pressure) occurs in the secondary bubble if the blow ratio in the primary bubble is reduced. Therefore, higher blow up ratios in the primary bubble will make it easier to orient a given material in the secondary bubble.

Several additional films were also produced by substantially the same process as described in Examples 1 and 2.

A liquid reservoir or "sock" containing heated water, located at the lower interior portion of the hot blown primary bubble (see reference numeral 28 of Figure 1) was used to control the temperature of the hot blown film prior to re-inflation into the second bubble. More specifically, the heated water was maintained at temperatures between 84°C (183°F) and 96°C (204°F) to raise the temperature of the hot blown film to above its orientation temperature.

It has been found that the liquid reservoir not only brings the temperature of the hot blown film up to its orientation temperature, but also equilibrates the temperature of the film around the circumference of the bubble. This in turn provides for better control of the final film gauge, and in particular reduces the incidence of thickened edges in the final film.

In Table 2, a list of the film structures produced, and the blow up ratios in the primary and secondary bubble are listed. The thickness of the final film, and temperature of the heated water inside the reservoir are also listed.

Table 1 describes materials utilized in Examples 3-17:

TABLE 1

| RESIN | COMMERCIAL NAME | DESCRIPTION | COMPANY |
|---|---|---|---|
| $EVA_1$ | ELVAX 3130 | EVA12% VA<br>MELT INDEX = 2.5 grams/10 min. | DU PONT |
| $EVA_2$ | 32.89 | EVA4%VA<br>MELT INDEX = 10 grams/10 min. | EXXON |
| $EVA_3$ | 9653 | EVA12%VA (including antifog additive) | DU PONT |
| $VLDPE_1$ | DFDA 1138 | .900 grams/cc<br>MELT INDEX = 0.4 grams/10 min. | UNION CARBIDE |
| $VLDPE_2$ | 1121 | DENSITY = .900 grams/cc<br>MELT INDEX = 0.4 grams/10 min.<br>(ANTIFOG VERSION OF DFDA 1138) | UNION CARBIDE |
| $VLDPE_3$ | 4003 | DENSITY = .905 grams/cc<br>MELT INDEX = .8 grams/10 min. | DOW |
| $VLDPE_4$ | XUR 1567 41225-18K | DENSITY = .900 grams/cc<br>MELT INDEX = .8 grams/10 min. | DOW |
| $VLDPE_5$ | DEFD 1491 | DENSITY = .900 grams/cc<br>MELT INDEX = 1.0 grams/10 min. | UNION CARBIDE |

6

EP 0 410 792 B1

Table 2

| EXAMPLE | FILM STRUCTURE | PRIMARY | SECONDARY | | THICKNESS | SOCK |
| | | | T | L | $\mu$m (mils) | TEMP °C (°F) |
|---|---|---|---|---|---|---|
| 4 | EVA$_1$/VLDPE$_1$/EVA$_1$ | 1.7:1 | 3:1 | 3.8:1 | 6.4 (.25) | 84 (183) |
| 5 | EVA$_1$/VLDPE$_1$/EVA$_1$ (1/2 RATE)[1] | 1.7:1 | 3:1 | 3.8:1 | 3.0 (.12) | 84 (183) |
| 6 | EVA$_1$/VLDPE$_1$/EVA$_1$ | 2.5:1 | 2.1:1 | 3.9:1 | 7.6 (.30) | 84 (184) |
| 7 | EVA$_2$/VLDPE$_1$/EVA$_2$ (LOWER SKIN RATES) | 2.5:1 | 2.1:1 | 3.9:1 | 7.6 (.30) | 96 (204) |
| 8 | 50%EVA$_3$/VLDPE$_1$/50%EVA$_3$ + +50%EVA$_1$/ /50%EVA$_1$ | 2.5:1 | 2.1:1 | 3.9:1 | 7.6 (.30) | 84 (184) |
| 9 | 50%EVA$_3$/VLDPE$_1$/50%EVA$_3$ + +50%EVA$_1$/ /50%EVA$_1$ | 2.0:1 | 2.6:1 | 3.4:1 | 7.6 (.30) | 84 (184) |
| 10 | 50%EVA$_3$/VLDPE$_1$/50%EVA$_3$ + +50%EVA$_1$/ /50%EVA$_1$ | 1.9:1 | 2.8:1 | 3.0:1 | 7.6 (.30) | 88 (190) |
| 11 | 50%EVA$_3$/VLDPE$_1$/50%EVA$_3$+(LOWER RATE)[2] +50%EVA$_1$/ /50%EVA$_1$ | 1.9:1 | 2.8:1 | 3.0:1 | 4.6 (.18) | 88 (190) |
| 12 | 50%EVA$_3$/VLDPE$_2$/VLDPE$_1$/VLDPE$_2$/50%EVA$_3$+ +50%EVA$_1$/ /50%EVA$_1$ | 1.9:1 | 2.8:1 | 3.0:1 | 7.6 (.30) | 91 (195) |
| 13 | 50%EVA$_1$/VLDPE$_1$/50%EVA$_3$ + +50%EVA$_1$/ /50%EVA$_1$ | 1.9:1 | 3.0:1 | 3.0:1 | 7.6 (.30) | 91 (195) |
| 14 | 50%EVA$_3$/VLDPE$_1$/50%EVA$_3$ + (FASTER DRAW)[3] +50%EVA$_1$/ /50%EVA$_1$ | 1.9:1 | 3.0:1 | 3.1:1 | 4.6 (.18) | 91 (195) |
| 15 | EVA$_1$/VLDPE$_3$/EVA$_1$ | 2.1:1 | 2.7:1 | 3.0:1 | 6.4 (.25) | 91 (195) |
| 16 | 50%EVA$_3$/VLDPE$_4$/50%EVA$_3$ + +50%EVA$_1$/ /50%EVA$_1$ | 1.9:1 | 2.7:1 | 2.8:1 | 7.6 (.30) | 91 (195) |
| 17 | EVA$_1$/VLDPE$_5$/EVA$_1$ | 1.9:1 | 3.0:1 | 3.0:1 | 6.4 (.25) | 91 (195) |

EP 0 410 792 B1

'All extruders were reduced to one half the rate of the extruders of Example 4, i.e. 41 rpm for Example 5.

²All extruders were reduced to 60% of the rate of the extruders of Example 4, i.e. 50 rpm for Example 11.

³The take-off speed of the film was 59% faster than that of Example 4, i.e. 61m (200 feet)/min. for Example 14.

In Table 4, a list of other film structures produced, and the blow up ratios in the primary and secondary bubble are listed. The thickness of the final film, and temperature of the heated water inside the reservoir are also listed.

Table 3 describes materials utilized in Examples 18-50. Other materials used in Examples 18-50 are listed and described in Table 1.

Table 3

| RESIN | COMMERCIAL NAME | DESCRIPTION | COMPANY |
|---|---|---|---|
| EVA$_4$ | ELVAX 3165 | EVA18% VA<br>MELT INDEX = .7 grams/10 min. | DU PONT |
| EVA$_5$ | ELVAX 3170 | EVA18%VA<br>MELT INDEX = 2.5 grams/10 min. | DUPONT |
| EVA$_6$ | ELVAX 3182 | EVA28%VA<br>MELT INDEX = 3.0 grams/10 min. | DU PONT |
| EVA$_7$ | ELVAX 3508 | EVA12% VA<br>MELT INDEX = .3 grams/10 min. | DUPONT |
| EAA$_1$ | PRIMACORE 1410 | EAA9.5% AA | DOW |
| VLDPE$_6$ | FW 1990 | DENSITY = .900 grams/cc<br>MELT INDEX = .8 grams/10 min. | NORSOLOR |
| VLDPE$_7$ | 30S | DENSITY = .901 grams/cc<br>MELT INDEX = .8 GRAMS/10 min. | DOW |
| VLDPE$_8$ | 30R | DENSITY = .902 grams/cc<br>MELT INDEX = .6 grams/10 min. | DOW |
| VLDPE$_9$ | 30Q | DENSITY = .895 grams/cc<br>MELT INDEX = .42 grams/10 min. | DOW |

8

## Table 4

| EXAMPLE | FILM STRUCTURE | PRIMARY | SECONDARY T | L | THICKNESS $\mu$m (mils) | SOCK TEMP °C (°F) |
|---|---|---|---|---|---|---|
| 18 | 50% EVA$_3$/VLDPE$_5$/50% EVA$_3$,[4] +50% EVA$_1$/ /+50% EVA$_1$ | 2.1:1 | 2.7:1 | 3:1 | 8 (.3) | 91 (195) |
| 19 | 50% EVA$_3$/VLDPE$_5$/50% EVA$_3$,[5] +50% EVA$_4$/ /+50% EVA$_4$ | 2.1:1 | 2.7:1 | 3:1 | 8 (.3) | 91 (195) |
| 20 | 25% EVA$_3$/VLDPE$_5$/25% EVA$_3$,[6] +75% EVA$_1$/ /+75% EVA$_1$ | 2.1:1 | 2.7:1 | 3:1 | 8 (.3) | 91 (195) |
| 21 | 50% EVA$_3$/VLDPE$_5$/50% EVA$_3$ +50% VLDPE$_5$/ /+50% VLDPE$_5$,[7] | 2.1:1 | 2.7:1 | 3:1 | 8 (.3) | 91 (195) |
| 22 | EVA$_1$/VLDPE$_1$/EVA$_1$ | 2.1:1 | 2.7:1 | 2.3:1 | 6 (.25) | 91 (195) |
| 23 | EVA$_1$/VLDPE$_1$/EVA$_1$[8] | 2.9:1 | 0 | 3:1 | | 91 (195) |
| 24 | 25%EVA$_3$/VLDPE$_1$/25%EVA$_3$[9] +75%EVA$_1$/ /+75%EVA$_1$ | 2.5:1 | 2.3:1 | 2:1 | 13 (.50) | 91 (195) |
| 25 | 25%EVA$_3$/VLDPE$_1$/25%EVA$_3$[10] +75%EVA$_1$/ /+75%EVA$_1$ | 2.5:1 | 2.3:1 | 2:1 | 13 (.50) | 91 (195) |
| 26 | 25%EVA$_3$/VLDPE$_1$/25%EVA$_3$[11] +75%EVA$_1$/ /+75%EVA$_1$ | 1.9:1 | 3:1 | 2:1 | 10 (.4) | 91 (195) |
| 27 | 25%EVA$_3$/VLDPE$_1$/25%EVA$_3$[12] +75%EVA$_1$/ /+75%EVA$_1$ | 1.9:1 | 3:1 | 2:1 | 10 (.4) | 91 (195) |
| 28 | 25%EVA$_3$/VLDPE$_1$/25%EVA$_3$[13] +75%EVA$_1$/ /+75%EVA$_1$ | 1.9:1 2.2:1 | 3:1 | 2:1 | 10 (.4) | 91 (195) |
| 29 | 25% EVA$_3$/VLDPE$_1$/25% EVA$_3$ +75% EVA$_1$/ /+75% EVA$_1$ | 2.2:1 | 3:1 | 2:1 | 6 (.25) | 91 (195) |
| 30 | 25%EVA$_3$/VLDPE$_1$/25%EVA$_3$[14] +75%EVA$_5$/ /+75%EVA$_5$ | 1.9:1 | 3:1 | 2:1 | 13 (.5) | 91 (195) |

Table 4

| EXAMPLE | FILM STRUCTURE | PRIMARY | SECONDARY | | THICKNESS | SOCK |
|---|---|---|---|---|---|---|
| | | | T | L | $\mu$m (mils) | TEMP °C (°F) |
| 31 | 25% $EVA_3$/$VLDPE_1$/25% $EVA_3$[15] +75% $EVA_5$/ /+75% $EVA_5$ | 1.9:1 | 3:1 | 2:1 | 6 (.25) | 91 (195) |
| 32 | 25% $EVA_3$/$VLDPE_1$/25% $EVA_3$[16] +75% $EVA_6$/ /+75% $EVA_6$ | 1.9:1 | 3:1 | 2:1 | 13 (.50) | 83 (181) |
| 33 | 25% $EVA_3$/$VLDPE_1$/25% $EVA_3$[17] +75% $EAA_1$/ /+75% $EAA_1$ | 1.9:1 | 3:1 | 2:1 | 13 (.5) | 91 (195) |
| 34 | $EVA_1$/$VLDPE_1$/$EVA_1$[18] | 1.9:1 | 3:1 | 2:1 | 25 (1.0) | 91 (195) |
| 35 | $EVA_1$/$VLDPE_1$/$EVA_1$[19] | 2.2:1 | 1.5:1 | 1:1 | | 91 (195) |
| 36 | $EVA_1$/$VLDPE_1$/$EVA_1$[20] | 2.1:1 | 2.1:1 | 1:1 | | 91 (195) |
| 37 | $EVA_7$/$VLDPE_5$/$EVA_7$[21] | 3:1 | | | | |
| 38 | $EVA_1$/$VLDPE_6$/$EVA_1$[22] | 2.4:1 | 2.3:1 | 2:1 | 13 (.5) | 89 (193) |
| 39 | $EVA_1$/$VLDPE_6$/$EVA_1$[23] | 2.4:1 | 2.3:1 | 2:1 | 6 (.25) | 89 (193) |
| 40 | $EVA_1$/$VLDPE_7$/$EVA_1$ | 2.1:1 | 2.7:1 | 2:1 | 13 (.5) | 91 (195) |
| 41 | $EVA_1$/$VLDPE_7$/$EVA_1$[24] | 2.1:1 | 2.7:1 | 2:1 | 6 (.25) | 91 (195) |
| 42 | 25% $EVA_3$/$VLDPE_8$/25% $EVA_3$[25] +75% $EVA_1$/ /+75% $EVA_1$ | 2.0:1 | 2.8:1 | 2:1 | 6 (.25) | 91 (195) |
| 43 | 25%$EVA_3$/$VLDPE_8$/25%$EVA_3$[26] +75%$EVA_1$/ /+75%$EVA_1$ | 2.9:1 | 1.9:1 | 2:1 | 6 (.25) | 91 (195) |
| 44 | 25% $EVA_3$/$VLDPE_9$/25% $EVA_3$[27] +75% $EVA_1$/ /+75% $EVA_1$ | 2.0:1 | 2.8:1 | 2:1 | 6 (.25) | 91 (195) |
| 45 | $VLDPE_1$[28] | 2.0:1 | 2.7:1 | 2:1 | 13 (.50) | 91 (195) |

EP 0 410 792 B1

## Table 4

| EXAMPLE | FILM STRUCTURE | PRIMARY | SECONDARY T | L | THICKNESS μm (Mils) | SOCK TEMP °C (°F) |
|---|---|---|---|---|---|---|
| 46 | 25% $EVA_3$/$VLDPE_1$/25% $EVA_3$[29] +75% $EVA_7$/ /+75% $EVA_7$ | 1.9:1 | 3:1 | 2:1 | 6 (.25) | 91 (195) |
| 47 | 25% $EVA_3$/$VLDPE_1$/25% $EVA_3$[30] +75% $EVA_1$/ /+75% $EVA_1$ | 1.9:1 | 2.9:1 | 2:1 | 6 (.25) | 91 (195) |
| 48 | 25% $EVA_3$/$VLDPE_1$/25% $EVA_3$[31] +75% $EVA_1$/ /+75% $EVA_1$ | 1.9:1 | 2.9:1 | 3:1 | 6 (.25) | 89 (193) |
| 49 | 25% $EVA_3$/$VLDPE_1$/25% $EVA_3$[32] +75% $EVA_1$/ /+75% $EVA_1$ | 2.3:1 | 2.5:1 | 2.5:1 | 6 (.25) | 89 (193) |
| 50 | 25% $EVA_3$/$VLDPE_1$/25% $EVA_3$[33] +75% $EVA_1$/ /+75% $EVA_1$ | 1.9:1 | 2.9:1 | 3:1 | 6 (.25) | 89 (193) |

Notes to Table

[1]Die slough problem (new air ring) die gap 2.8μm (0.110")

[5]Reduced die slough.  Couldn't maintain bubble.

[6]No die slough, bubble life 15 min.

[7]Mottled coex.  Secondary bubble life short.

[8]L.O. film

[9]Reduced die gap from 2.8μm (.110") to 1.9μm (.075") 2 hr. bubble.

Couldn't make 6.4μm (.25 mil).

[10]Changed die gap to 1μm (.040").  Primary bubble temp. from die to sock 149°C (300°F), 78°C (173°F), 71°C (160°F), 86°C (186°F), still unstable orientation.  Changed to Johnson air ring.

[11]Die gap = 1.9μm (.075").  Primary bubble temp. from die to sock 137°C (279°F), 87°C (188°F), 59°C (138°F), 88°C (191°F). Secondary bubble gauge = .2 - .6.

[12]Adjusted Gauge:    Secondary:    .35-.5

                      Primary:      .16-.27

Primary bubble gauge off-balanced to achieve better gauge. Probably due to skin layer thickness variations orienting differently.

[13]Turned off chiller causing primary bubble to widen.

[14]Chilled air - Johnson air ring.

[15]Some incompatibility haze but ran well fewer gels causing bubble breaks.

[16]Serious incompatibility.

[17]Hard to process.

[18]Made for low cost forming web.

[19]Transverse orientation.

[20]Transverse maximum (obstruction limited).

[21]Could not maintain bubble because of apparent excess primary orientation, hot blown instead.

[22]Amorphous clear primary bubble.

[23]Primary bubble pulsed. Switched core to (LW2550). Primary melt was too weak to make film.

[24]Primary bubble too weak.

[25]Stable bubble.

[26]More stable than 41.

[27]Very stable (gels might have been due to EVA)

[28]Stable orientation, hazy film.

[29]Progressed to hazy weak film. Melt became cheesy. Suspected X-linking in die or extruder.

[30].1% Irganox 1010 added to skins.

[31]Increased L.O.

[32]Lower transverse & L.O. ratio.

[33]Increased die from 177 to 191°C (350 to 375°F) Conclusion: Irganox 1010 reduced X-linking of skin layers.

In Table 6, a list of additional film structures produced, and a blow up ratio in the primary and secondary bubble are listed. The thickness of the final film, and temperature of the heated water inside the reservoir are also listed.

Table 5 describes materials utilized in Example 51 through 76. Other materials used in Examples 51 through 76 are listed and described in Tables 1 and 3.

TABLE 5

| RESIN | COMMERCIAL NAME | DESCRIPTION | COMPANY |
|---|---|---|---|
| $VLDPE_{10}$ | TAFMER 0680 | DENSITY = .88 grams/cc<br>MELT INDEX = .4 grams/10 min. | MITSUI |
| $VLDPE_{11}$ | DEFD 1064 NT 7 | DENSITY = .912 grams/cc<br>MELT INDEX = 1.0 grams/10 min. | UNION CARBIDE |
| $VLDPE_{12}$ | 1210 | DENSITY = .89 grams/cc<br>Narrow Molecular Weight Distribution<br>MELT INDEX = 1 gram/10 min. | UNION CARBIDE |
| $VLDPE_{13}$ | 61509.32 | DENSITY = .911 grams/cc<br>MELT INDEX = .55 grams/10 min. | DOW |
| $SBC_1$ | KR-10 | STYRENE BUTADIENE COPOLYMER<br>DENSITY = 1.01 grams/cc<br>MELT INDEX = 8 grams/10 min. | PHILLIPS |

13

Table 6

| EXAMPLE | FILM STRUCTURE | PRIMARY | SECONDARY | | THICKNESS $\mu$m (Mils) | SOCK TEMP °C (°F) |
|---------|----------------|---------|-----------|---|--------------------------|--------------------|
| | | | T | L | | |
| 51 | 50% EVA$_1$/VLDPE$_5$/50% EVA$_1$[34] +50% EVA$_3$/ /+50% EVA$_3$ | | | | | |
| 52 | 50% EVA$_1$/EVA$_7$/50% EVA$_1$[35] +50% EVA$_3$/ /+50% EVA$_3$ | | | | | |
| 53 | 50% EVA$_1$/VLDPE$_3$/50% EVA$_1$[36] +50% EVA$_3$/ /+50% EVA$_3$ | | | | | |
| 54 | 50% EVA$_7$/VLDPE$_3$/50% EVA$_7$[37] +50% EVA$_1$/ /+50% EVA$_3$ | | | | | |
| 55 | 50% EVA$_7$/80% VLDPE$_5$/50% EVA$_7$[38] +50% EVA$_1$/+20% VLDPE$_3$/+50% EVA$_3$ | 2.1:1 | 2.70:1 | 2.85:1 | | 91 (195) |
| 56 | 50% EVA$_1$/80% VLDPE$_5$/50% EVA$_1$[39] +50% EVA$_3$/+20% VLDPE$_3$/+50% EVA$_3$ | 2.1:1 | 2.70:1 | 2.85:1 | | 91 (195) |
| 57 | 50% EVA$_7$/80% VLDPE$_3$/50% EVA$_7$[40] +50% EVA$_3$/+20% VLDPE$_{10}$/+50% EVA$_3$ | 2.1:1 | 2.75:1 | 2.83:1 | | 91 (195) |
| 58 | 50% EVA$_7$/65% VLDPE$_5$/50% EVA$_7$[41] +50% EVA$_1$/35% VLDPE$_3$/+50% EVA$_3$ | 2.10:1 | 2.7:1 | 2.85:1 | | 91 (195) |
| 59 | 50% EVA$_1$/65% VLDPE$_{11}$/50% EVA$_1$[42] +50% EVA$_3$/35% VLDPE$_{12}$/+50% EVA$_3$ | 2.23:1 | 2.67:1 | 2.88:1 | 5.1 (.20) | 99 (211) |
| 60 | 50% EVA$_1$/65% VLDPE$_{11}$/50% EVA$_1$[43] +50% EVA$_3$/35% VLDPE$_{12}$/+50% EVA$_3$ | 2.55:1 | 1.00:1 | 3.00:1 | 7.8 (.70) | 99 (211) |
| 61 | 50% EVA$_1$/VLDPE$_{11}$/50% EVA$_1$[44] +50% EVA$_3$/ /+50% EVA$_3$ | 2.23:1 | 2.67:1 | 2.88:1 | | 99 (211) |
| 62 | VLDPE$_{11}$/VLDPE$_{11}$/VLDPE$_{11}$[45] | 2.33:1 | 1.00:1 | 3.00:1 | 38.1 (1.50) | 93 (200) |

EP 0 410 792 B1

EP 0 410 792 B1

Table 6

| EXAMPLE | FILM STRUCTURE | PRIMARY | SECONDARY T L | THICKNESS μm (Mils) | SOCK TEMP °C (°F) |
|---|---|---|---|---|---|
| 63 | $VLDPE_{11}/VLDPE_{11}/VPDPE_{11}$ | 3.29:1 | 1.90:1 3.43:1 | | 99 (210) |
| 64 | 50% $EVA_1$/$VLDPE_{11}$/50% $EVA_1$ +50% $EVA_3$/ /+50% $EVA_3$ | 3.29:1 | 1.90:1 3.00:1 | | 98 (209) |
| 65 | 50% $EVA_1$/$VLDPE_{11}$/50% $EVA_1$[46] +50% $EVA_3$/ /+50% $EVA_3$ | 2.23:1 | 2.67:1 2.88:1 | | 99 (211) |
| 66 | 50% $EVA_1$/$VLDPE_{11}$/50% $EVA_1$ +50% $EVA_3$/ /+50% $EVA_3$ | 2.23:1 | 2.67:1 3.00:1 | 5.1 (.20) | 99 (211) |
| 67 | 50% $EVA_1$/65% $VLDPE_{11}$/50% $EVA_1$ +50% $EVA_3$/+35% $EVA_4$/+50% $EVA_3$ | 2.33:1 | 2.5:1 2.65:1 | 10.2 (.40) | 97 (207) |
| 68 | 50% $EVA_1$/$VLDPE_{13}$/50% $EVA_1$ +50% $EVA_3$/ /+50% $EVA_3$ | 2.12:1 | 2.90:1 3.00:1 | 6.4 (.25) | 98 (209) |
| 69 | 50% $EVA_1$/$VLDPE_{13}$/50% $EVA_1$ +50% $EVA_3$/ /+50% $EVA_3$ | 1.60:1 | 3.73:1 3.00:1 | 5.1 (.20) | 98 (209) |
| 70 | 50% $EVA_1$/$VLDPE_1$/50% $EVA_1$ +50% $EVA_3$/ /+50% $EVA_3$ | 2.12:1 | 3.00:1 3.00:1 | 5.1 (.20) | 96 (205) |
| 71 | $EVA_5$/$VLDPE_1$/$EVA_5$[47] | 2.12:1 | 3.00:1 3.00:1 | 5.1 (.20) | 96 (205) |
| 72 | $EVA_4$/$VLDPE_1$/$EVA_4$[48] | 2.02:1 | 3.05:1 3.00:1 | 5.1 (.20) | |
| 73 | $EVA_4$/80% $VLDPE_{13}$/$EVA_4$[49] +20% $VLDPE_{10}$ | 2.02:1 | 2.90:1 3.00:1 | 5.1 (.20) | 99 (211) |
| 74 | 50% $EVA_1$/80% $VLDPE_{13}$/50% $EVA_1$[50] +50% $EVA_3$/+20% $VLDPE_{10}$/+50% $EVA_3$ | 2.02:1 | 2.90:1 3.00:1 | 5.1 (.20) | 99 (211) |
| 75 | $EVA_4$/80% $VLDPE_{13}$/$EVA_4$[51] /+20% $EVA_4$ | 2.02:1 | 2.90:1 3.00:1 | 5.1 (.20) | 99 (211) |

Table 6

| EXAMPLE | FILM STRUCTURE | PRIMARY | SECONDARY T | L | THICKNESS (MILS) | SOCK TEMP(°F) |
|---|---|---|---|---|---|---|
| 76 | $SBC_1/EVA_6/80\%\ VLDPE_{13}/EVA_6/SBC_1{}^{52}$ /+20% $EVA_4$ | 2.97:1 | 1.00:1 | 2.50:1 | 25.4 (1.00) | 99 (210) |

## Notes for Table 5

[33] Primary bubble too weak.

[34] Better primary bubble strength but secondary was unstable.

[35] Could not maintain secondary bubble.

[36] Better primary stability but secondary still unstable.

[37] Slightly hazy film with 20 min. bubble life.

[38] Primary lost some stability secondary bubble life 20 min. better clarity.

[39] Up to 2 hr. bubble (blend approach promising).

[40] 610m (2000ft) run when pumps failed.

[41] Hazy film, hard to blow secondary but stable when blown.

[42] L. O. material.

[43] Easier to blow than Sample 5. Stable secondary but hazy film.

[44] L. O. material.

[45] Stable but hazy bubble.

[46] Lost feed on skin layers after a short time.

[47] 18% VA skin layers contributed to best stability yet.

[48] Best and most stable process yet. No cold stretch line as in 13 & 14. Very tough primary.

[49] Could only maintain 10 min. bubbles plus primary was not as tough.

[50] Became hazy due to EVA blend.

[51] Clear monax for label trials.

The inventor has found that materials with high molecular weight and wide molecular weight distribution are preferred for the core layer of multilayer film structures in accordance with the invention. These materials, particularly VLDPE, are also characterized by low crystallinity at processing temperatures.

It has also been found that high vinyl acetate EVA resins i.e. 18% and higher, are preferred for use in the outer layers of multilayer films of the present invention. These higher vinyl acetate EVA resins provide a wider sealing range for the final film when used in in-store overwrap applications on conventional manual and automatic equipment.

The oriented film produced by the process of the present invention has a relatively high free shrink and shrink force. At 85°C (185°F), a typical free shrink value for the film of the present invention is 50%. In end-use applications where it is desirable to reduce the amount of free shrink or shrink force or shrink tension in the film, the material exiting the secondary bubble may be annealed or heat set by means of a tertiary bubble. This bubble may be characterized as one of intermediate pressure, compared with the relatively high pressure secondary bubble, and the relatively low pressure primary bubble.

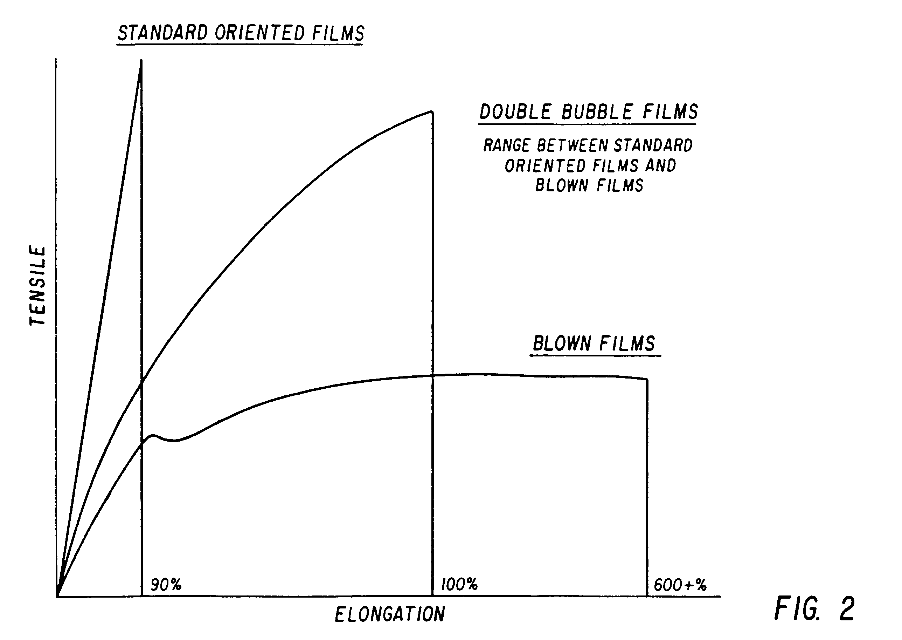

Films produced by the present double bubble process can be graphically characterized as shown in Fig.2. Because of the nature of the process, a thin film is produced that has excellent "memory" combined with good elongation. This combination of properties compares favorably with conventionally oriented film,which has good memory but poor elongation properties. The present film also compares favorably with conventional hot blown films which exhibit good elongation but poor memory.

**Claims**

1. A method of making a thin oriented polymeric film comprising:
   a) extruding the polymer as a melt stream through a tubular die (12);
   b) hot blowing the extruded film downward to a first set of pinch rolls (16a); the film forming a primary bubble (14);
   c) passing the hot blown film in contact with a heated liquid medium located in a reservoir (28) disposed at a lower end of the primary bubble;
   d) heating the hot blown film to a temperature above its orientation temperature;
   e) directing the heated film through the first set of pinch rolls;
   f) reinflating the hot blown film below the first set of pinch rolls by a blown bubble process; and
   g) collapsing the reinflated film through a second set of pinch rolls (22).

2. A method according to claim 1 wherein the extruded film is hot blown at a blow-up ratio of between about 1.5:1 and 3:1.

3. A method according to claim 1 or 2 wherein the heated liquid medium is hot water, hot oil, hot emulsion, hot wax or propylene glycol.

4. A method according to any one of the preceding claims wherein the hot blown film is oriented at a ratio of between about 1:1 and 5:1 in the transverse direction and/or wherein the hot blown film is oriented at a ratio of between about 1:1 and 5:1 in the machine direction.

5. A method according to any one of the preceding claims wherein the film is a monolayer film which comprises very low density polyethylene, ethylene vinyl acetate copolymer, or a mixture thereof.

6. A method according to any one of claims 1 to 4 wherein the film is a monolayer film which comprises high density polyethylene.

7. A method according to any one of claims 1 to 4 wherein the film is a multilayer film.

8. A method according to claim 7 wherein the film comprises a core layer comprising very low density polyethylene, ethylene vinyl acetate copolymer, or a blend thereof; and two outer layers comprising an olefinic polymer or copolymer.

9. A method according to claim 8 wherein the olefinic polymer or copolymer of the outer layers comprises ethylene vinyl acetate copolymer, very low density polyethylene, ethylene acrylic acid copolymer, ethylene methacrylic acid copolymer, or a blend of any of these materials.

10. A method according to claim 9 wherein the ethylene vinyl acetate copolymer of the outer layers comprises a blend of two ethylene vinyl acetate copolymer resins or wherein the ethylene vinyl acetate copolymer of the outer layers is blended with very low density polyethylene.

11. A method according to claim 8 9, or 10 further comprising an intermediate layer, disposed between the core layer and each outer layer respectively, comprising ethylene vinyl acetate copolymer, very low density polyethylene, ethylene acrylic acid copolymer, ethylene methacrylic acid copolymer, or a blend of any of these materials.

12. A method according to any one of the preceding claims wherein the film has a thickness of less than about 25 $\mu$m (1 mil).

13. An apparatus for making thin, oriented polymeric film comprising:
   a) means for extruding the polymer as a melt stream through a tubular die (12);

b) means for hot blowing the extruded film downward to a first set of pinch rolls (16a) the film forming a primary bubble (14);

c) means for heating the hot blown film to a temperature above its orientation temperature;

d) a first set of pinch rolls through which the heated film is directed;

e) a second set of pinch rolls (22) below the first set of pinch rolls by means of which the heated film, after reinflation by a blown bubble process, is collapsed; and

f) means for circulating a heated liquid to and from a reservoir (28) disposed at the lower end of the primary bubble.

**Patentansprüche**

1. Verfahren zur Herstellung einer dünnen orientierten Polymerfolie, bei dem

a) das Polymer als Schmelzestrom durch eine Ringdüse (12) extrudiert wird,

b) die extrudierte Folie abwärts zu einem ersten Satz Quetschwalzen (16a) warmgeblasen wird, wobei die Folie eine Primärblase (14) bildet,

c) die warmgeblasene Folie in Kontakt mit einem erwärmten flüssigen Medium geführt wird, das sich in einem Vorratsgefäß (28) befindet, welches am unteren Ende der Primärblase angeordnet ist,

d) die warmgeblasene Folie auf eine Temperatur über ihrer Orientierungstemperatur erwärmt wird,

e) die erwärmte Folie durch einen ersten Satz Quetschwalzen geführt wird,

f) die warmgeblasene Folie unterhalb des ersten Satzes Quetschwalzen nach einem blown-bubble-Verfahren erneut aufgeblasen wird und

g) die erneut aufgeblasene Folie durch einen zweiten Satz Quetschwalzen (22) zusammenfallen gelassen wird.

2. Verfahren nach Anspruch 1, bei dem die extrudierte Folie mit einem Aufblasverhältnis zwischen etwa 1,5:1 und 3:1 warmgeblasen wird.

3. Verfahren nach Anspruch 1 oder 2, bei dem das erwärmte flüssige Medium heißes Wasser, heißes Öl, heiße Emulsion, heißes Paraffin oder Propylenglykol ist.

4. Verfahren nach einem der vorhergehenden Ansprüche, bei dem die warmgeblasene Folie mit einem Verhältnis zwischen etwa 1:1 und 5:1 in Querrichtung orientiert wird und/oder bei dem die warmgeblasene Folie mit einem Verhältnis zwischen etwa 1:1 und 5:1 in Maschinenrichtung orientiert wird.

5. Verfahren nach einem der vorhergehenden Ansprüche, bei dem die Folie eine Einschichtenfolie ist, die Polyethylen mit sehr niedriger Dichte, Ethylen-Vinylacetat-Copolymer oder eine Mischung daraus umfaßt.

6. Verfahren nach einem der Ansprüche 1 bis 4, bei dem die Folie eine Einschichtenfolie ist, die Polyethylen mit hoher Dichte umfaßt.

7. Verfahren nach einem der Ansprüche 1 bis 4, bei dem die Folie eine Mehrschichtenfolie ist.

8. Verfahren nach Anspruch 7, bei dem die Folie eine Kernschicht, die Polyethylen mit sehr niedriger Dichte, Ethylen-Vinylacetat-Copolymer oder eine Mischung daraus umfaßt, und zwei Außenschichten umfaßt, die ein olefinisches Polymer oder Copolymer umfassen.

9. Verfahren nach Anspruch 8, bei dem das olefinische Polymer oder Copolymer der Außenschichten Ethylen-Vinylacetat-Copolymer, Polyethylen mit sehr niedriger Dichte, Ethylen-Acrylsäure-Copolymer, Ethylen-Methacrylsäure-Copolymer oder eine Mischung aus beliebigen dieser Materialien umfaßt.

10. Verfahren nach Anspruch 9, bei dem das Ethylen-Vinylacetat-Copolymer der Außenschichten eine Mischung aus zwei Ethylen-Vinylacetat-Copolymerharzen umfaßt oder das Ethylen-Vinylacetat-Copolymer der Außenschichten mit Polyethylen mit sehr niedriger Dichte gemischt ist.

11. Verfahren nach Anspruch 8, 9 oder 10, bei dem außerdem eine Zwischenschicht vorhanden ist, die jeweils zwischen Kernschicht und Außenschicht angeordnet ist und Ethylen-Vinylacetat-Copolymer, Polyethylen mit sehr niedriger Dichte, Ethylen-Acrylsäure-Copolymer, Ethylen-Methacrylsäure-Copolymer oder eine Mischung aus beliebigen dieser Materialien umfaßt.

12. Verfahren nach einem der vorhergehenden Ansprüche, bei dem die Folie eine Dicke von weniger als etwa 25 μm (1 mil) aufweist.

13. Vorrichtung zur Herstellung von dünner, orientierter Polymerfolie, die
a) Einrichtungen zum Extrudieren des Polymers als Schmelzestrom durch eine Ringdüse (12),
b) Einrichtungen zum Warmblasen der extrudierten Folie abwärts zu einem ersten Satz Quetschwalzen (16a), wobei die Folie eine Primärblase (14) bildet,
c) Einrichtungen zum Erwärmen der warmgeblasenen Folie auf eine Temperatur über ihrer Orientierungstemperatur,
d) einen ersten Satz Quetschwalzen, durch den die erwärmte Folie geführt wird,
e) einen zweiten Satz Quetschwalzen (22) unterhalb des ersten Satzes Quetschwalzen, durch den die erwärmte Folie nach dem erneuten Aufblasen nach einem "blown-bubble"-Verfahren zusammenfallen gelassen wird, und
f) Einrichtungen zum Zirkulieren einer erwärmten Flüssigkeit zu und von einem Vorratsgefäß (28) umfaßt, welches am unteren Ende der Primärblase angeordnet ist.

## Revendications

1. Méthode de fabrication d'un film polymérique orienté et mince comprenant :
a) l'extrusion du polymère sous la forme d'un courant en fusion à travers une filière tubulaire (12);
b) le soufflage à chaud du film extrudé vers le bas vers un premier groupe de rouleaux entraîneurs (16a); le film formant une bulle primaire (14);
c) le passage du film soufflé et chaud en contact avec un milieu liquide chauffé placé dans un réservoir (28) disposé à une extrémité inférieure de la bulle primaire;
d) le chauffage du film soufflé chaud à une température au-delà de sa température d'orientation;
e) la direction du film chauffé à travers le premier groupe de rouleaux entraîneurs;
f) le nouveau gonflage du film soufflé chaud en dessous du premier groupe de rouleaux entraîneurs par un procédé de bulle soufflé; et
g) l'affaissement du film à nouveau gonflé à travers un second groupe de rouleaux entraîneurs (22).

2. Méthode selon la revendication 1 où le film extrudé est soufflé à chaud à un rapport de soufflage compris entre environ 1,5:1 et 3:1.

3. Méthode selon la revendication 1 ou 2 où le milieu liquide chauffé est de l'eau chaude, de l'huile chaude, une émulsion chaude, de la cire chaude ou du propylène glycol.

4. Méthode selon l'une quelconque des revendications précédentes où le film soufflé chaud est orienté à un rapport compris entre environ 1:1 et 5:1 en direction transversale et/ou le film soufflé chaud est orienté à un rapport compris entre environ 1:1 et 5:1 dans la direction de la machine.

5. Méthode selon l'une quelconque des revendications précédentes où le film est un film monocouche qui comprend du polyéthylène de très basse densité, un copolymère d'éthylène acétate de vinyle ou un mélange.

6. Méthode selon l'une quelconque des revendications 1 à 4 où le film est un film monocouche qui comprend du polyéthylène de haute densité.

7. Méthode selon l'une quelconque des revendications 1 à 4 où le film est un film multicouche.

8. Méthode selon la revendication 7 où le film comprend une couche formant âme comprenant du polyéthylène de très faible densité, un copolymère d'éthylène acétate de vinyle ou leurs mélanges; et deux couches externes comprenant un polymère ou copolymère d'oléfine.

9. Méthode selon la revendication 8 où le polymère ou copolymère d'oléfine des couches externes comprend un copolymère d'éthylène acétate de vinyle, du polyéthylène de très faible densité, un copolymère éthylène acide acrylique, un copolymère d'éthylène acide méthacrylique ou un mélange de chacun de ces matériaux.

10. Méthode selon la revendication 9 où le copolymère d'éthylène acétate de vinyle des couches externes se compose d'un mélange de deux résines de copolymère d'éthylène acétate de vinyle ou bien où le copolymère d'éthylène acétate de vinyle des couches externes est mélangé à du polyéthylène de très faible densité.

11. Méthode selon la revendication 8, 9 ou 10 comprenant de plus une couche intermédiaire disposée entre la couche formant âme et chaque couche externe respectivement, comprenant un copolymère d'éthylène acétate de vinyle, du polyéthylène de très faible densité, un copolymère d'éthylène acide acrylique, un copolymère d'éthylène acide méthacrylique ou un mélange de chacun de ces matériaux.

12. Méthode selon l'une quelconque des revendications précédentes où le film a une épaisseur qui est inférieure à environ 25 μm (1 millième de pouce).

13. Appareil pour la fabrication d'un film polymérique orienté mince, comprenant :

a) un moyen pour extruder le polymère sous la forme d'un courant en fusion à travers une fillière tubulaire (12).

b) un moyen pour le soufflage à chaud du film extrudé vers le bas, vers un premier groupe de rouleaux entraîneurs (16a), le film formant une bulle primaire (14);

c) un moyen pour chauffer le film soufflé chaud à une température au-dessus de sa température d'orientation;

d) un premier groupe de rouleaux entraîneurs par où est dirigé le film chauffé;

e) un second groupe de rouleaux entraîneurs (22) en dessous du premier groupe de rouleaux entraîneurs au moyen duquel le film chauffé, après avoir été à nouveau gonflé par un procédé de bulle soufflée est affaissé; et

f) un moyen pour la circulation d'un liquide chauffé vers et d'un réservoir (28) disposé à l'extrémité inférieure de la bulle primaire.

FIG. 1

FIG. 2

STANDARD ORIENTED FILMS

DOUBLE BUBBLE FILMS

RANGE BETWEEN STANDARD
ORIENTED FILMS AND
BLOWN FILMS

BLOWN FILMS

TENSILE

90%     100%     600+%

ELONGATION

EP 0 410 792 B1